# EUROPÄISCHE PATENTSCHRIFT

(11) **EP 1 322 150 B1**
(45) Veröffentlichungstag und Bekanntmachung des Hinweises auf die Patenterteilung: **09.03.2005**
(21) Anmeldenummer: 01962552.4
(22) Anmeldetag: 17.07.2001
(51) Int. Cl.: A01K 63/04

(54) **BECKEN ZUR FISCHBRUT, FISCHAUFZUCHT ODER INTENSIVMAST VON FISCHEN**
BASIN FOR BREEDING FISH, REARING FISH OR INTENSIVE FATTENING OF FISH
BASSIN POUR ALEVINS, PISCICULTURE OU PISCICULTURE INTENSIVE

(30) Priorität: 20.07.2000 DE 10035242
(43) Veröffentlichungstag der Anmeldung: 02.07.2003
(73) Patentinhaber: UNITED FOOD ENGINEERING GMBH, 69181 Leimen (DE)
(72) Erfinder: HARTUNG, Christoph, 69469 Weinheim (DE); STEINBACH, Peter, 67169 Kallstadt (DE); WINKLER, Reinhold, 68642 Buerstadt (DE)
(74) Vertreter: Meyer-Roedern, Giso, Dr.
(86) Internationale Anmeldenummer: PCT/DE2001/002605
(87) Internationale Veröffentlichungsnummer: WO 2002/007510

(56) Entgegenhaltungen:
- EP-A- 0 498 397
- WO-A-00/08923
- DE-A- 3 742 642
- DE-A- 19 847 027

## Beschreibung

Die Erfindung betrifft ein Becken zur Fischbrut, Fischaufzucht oder Intensivmast von Fischen, in dem sich wenigstens ein überfluteter Festbettreaktor zur mikrobiologischen Wasseraufbereitung mit einem darunter angeordneten Begasungsteil befindet, durch das sauerstoffhaltiges Gas zugeführt und das mit Sauerstoff angereicherte Wasser nach dem Mammut-Pumpeneffekt in aufsteigender Strömung durch den Festbettreaktor gefördert wird.

Ein solches Fischbecken ist aus der DE 198 47 027 A1 oder der EP498397 bekannt. Das Bekken hat einen Festbettreaktor, der in einem Wasseraufbereitungsschacht angeordnet ist, dessen Boden tiefer ist, als der Beckenboden in dem Aufenthaltsbereich für die Fische.

Die Anordnung des Festbettreaktors in einem Wasseraufbereitungsschacht ist für viele Anwendungsfälle wohlbewährt. Durch die größere Wassertiefe hat man im Bereich des Begasungsteils einen höheren Partialdruck, und es ergibt sich eine längere Verweilzeit des aufsteigenden Sauerstoffs. Beides ist der Sauerstoffanreicherung des Wassers dienlich. Man kommt mit einem relativ schmalen Festbettreaktors aus und kann den Graben darunter für die Schlammräumung nutzen.

Nachteilig bei dem bekannten Fischbecken mit einem Wasseraufbereitungsschacht für den Festbettreaktor sind die hohen Gestehungskosten. Das Ausheben und Betonieren des Grabens unter dem Festbettreaktor ist aufwendig.

Man ist auch in der Baugeometrie des Fischbeckens festgelegt. Es befinden sich unveränderlich eine Anzahl Festbettreaktoren bestimmter Form und Größe in den dafür vorgesehenen Wasseraufbereitungsschächten.

Beim Durchströmen des Wasseraufbereitungsschachts findet eine mehrfache Strömungsumlenkung statt. Damit geht ein Strömungswiderstand einher, dem man durch eine hohe Förderkapazität der installierten Mammutpumpen Rechnung tragen muß. Dadurch sind auch die laufenden Betriebskosten hoch.

Aufgabe der Erfindung ist es, ein Becken der eingangs genannten Art zwecks Kostensenkung baulich zu vereinfachen und auf eine variable Bestückung mit Festbettreaktoren zur mikrobiologischen Wasseraufbereitung auszulegen, um eine Anpassung an den Besatz hinsichtlich Art und Größe der Fische zu ermöglichen.

Diese Aufgabe wird mit einem derartigen Becken dadurch gelöst, daß der Boden des Beckens unter dem Festbettreaktor und im Aufenthaltsbereich der Fische durchgehend flach ist, daß der Festbettreaktor mit dem Begasungsteil als beckenextern vormontiertes, in das Becken einsetzbares Modul ausgebildet ist, und daß das Becken darauf ausgelegt ist, mit einer variablen Anzahl von Modulen bestückt zu werden.

Die durchgehend flache Ausbildung des Beckenbodens ist herstellungstechnisch denkbar einfach und kostengünstig.

Es findet keine Strömungsumlenkung nach unten statt. Dadurch ergibt sich ein geringerer Strömungswiderstand, und man kommt mit einer niedrigeren Förderkapazität der installierten Mammutpumpen aus.

Der modulare Aufbau des Festbettreaktors mit dem Begasungsteil ermöglicht es, die Kapazität der mikrobiologischen Wasseraufbereitung an den Fischbesatz anzupassen, um der Art und Größe der Fische Rechnung zu tragen. Man denke beispielsweise an einen Besatz mit so verschiedenen Fischen wie Welsen oder Aalen.

Durch den modularen Aufbau der mikrobiologischen Wasseraufbereitung wird die Wartung des Fischbeckens wesentlich vereinfacht. Die Module sind einfach zugänglich und gegeneinander austauschbar.

Schließlich geht mit dem modularen Aufbau der mikrobiologischen Wasseraufbereitung der nicht zu unterschätzende Vorteil einher, daß man einen Festbettreaktor in einem Becken anfahren und dann in ein anderes Becken umsetzen kann. Die Anfahrzeit für ein Fischecken läßt sich dadurch von mehreren Wochen auf einen Tag und weniger verringern.

Unter "Anfahren" ist ein mikrobiologisches Konditionieren des Festbettreaktors zu verstehen, bei dem er mit für die biologische Abwasserreinigung des Fischabwassers geeigneten Mikroorganismen besiedelt wird.

Bei einer bevorzugten Ausführungsform werden mit einem in das Becken eingesetzten Modul dem Fischbesatz nach getrennte Kompartimente darin abgeteilt.

Bei einer bevorzugten Ausführungsform erfolgt eine Zirkulationsströmung des Wassers durch die Kompartimente eines oder mehrerer Becken.

Bei einer bevorzugten Ausführungsform ist das Becken mit seitlichen Führungsschienen für die Module versehen. Diese sind vorzugsweise in die Seitenwände des Beckens eingelassen, so daß sie über deren Oberfläche nicht vorstehen. Dadurch ist sichergestellt, daß sich die Fische an den Führungsschienen nicht verletzen. Auch kann ein zum Abfischen verwendetes Netz nicht an den Führungsschienen hängenbleiben.

Bei einer bevorzugten Ausführungsform fällt die Oberseite des Festbettreaktors in Wasserabströmrichtung ab. Die Oberseite kann insbesondere eben und in Wasserabströmrichtung abfallend geneigt sein.

Verglichen mit einem Fischbecken, bei dem der Festbettreaktor in einem Wasseraufbereitungsschacht angeordnet ist, ist ein erfindungsgemäß oberhalb des durchgehend flachen Beckenbodens befindlicher Festbettreaktor von notwendigerweise niedrigerer Höhe. Wegen des geringeren Partialdrucks im Bereich des Begasungsteils und der kürzeren Verweilzeit des Wasser in dem Festbettreaktor muß dieser breiter ausgelegt werden, um die gleiche Anreicherungskapazität an Sauerstoff für das Wasser zu erreichen. Die größere Breite behindert das Abströmen des Wassers oberhalb des Festbettreaktors. Das wird dadurch kompensiert, daß man die Oberseite des Festbettreaktors in Wasserabströmrichtung abfallen läßt.

Mit der geringeren Bauhöhe des Festbettreaktors geht der Vorteil einher, daß eine Übersättigung des Wassers mit Stickstoff ausgeschlossen ist.

Bei einer bevorzugten Ausführungsform ist abströmendig unter dem Festbettreaktor eine Strömungsleitblende angeordnet, die bis unter das Begasungsteil reicht.

Bei einer bevorzugten Ausführungsform ist die Strömungsleitblende konvex gekrümmt.

Gegenstand der Erfindung ist nicht nur das vorgenannte Fischbecken, sondern auch das dafür vorgesehene Modul mit Festbettreaktor und Begasungsteil.

Die Erfindung wird im folgenden anhand eines in der Zeichnung dargestellten Ausführungsbeispiels näher erläutert. Es zeigen:

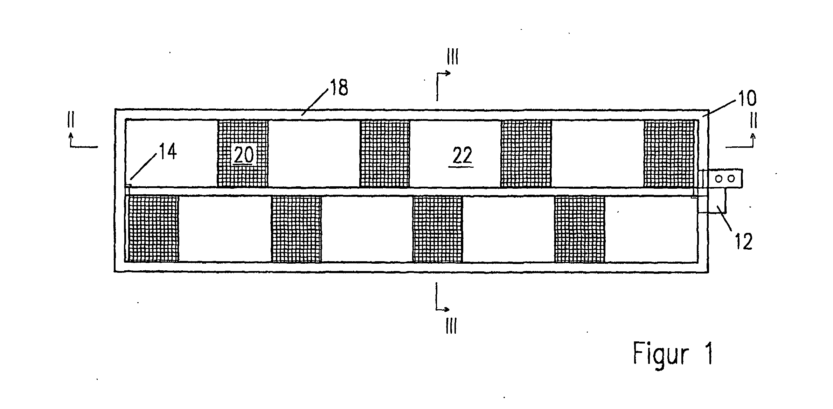

- Fig. 1: eine Draufsicht von oben auf eine Anlage mit zwei parallel nebeneinander angeordneten Fischbecken, die mit je vier Modulen zur mikrobiologischen Wasseraufbereitung bestückt sind;

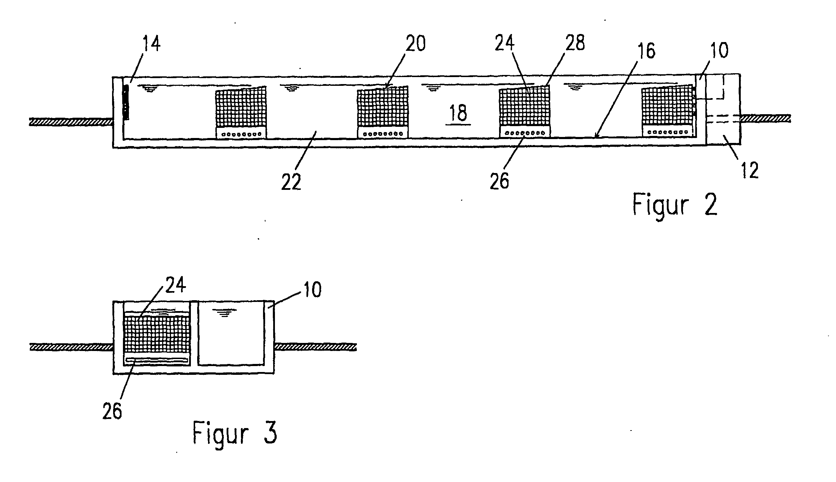

- Fig. 2: einen Längsschnitt durch die Anlage nach II-II von Fig. 1;
- Fig. 3: einen Querschnitt durch die Anlage nach III-III , von Fig. 1;

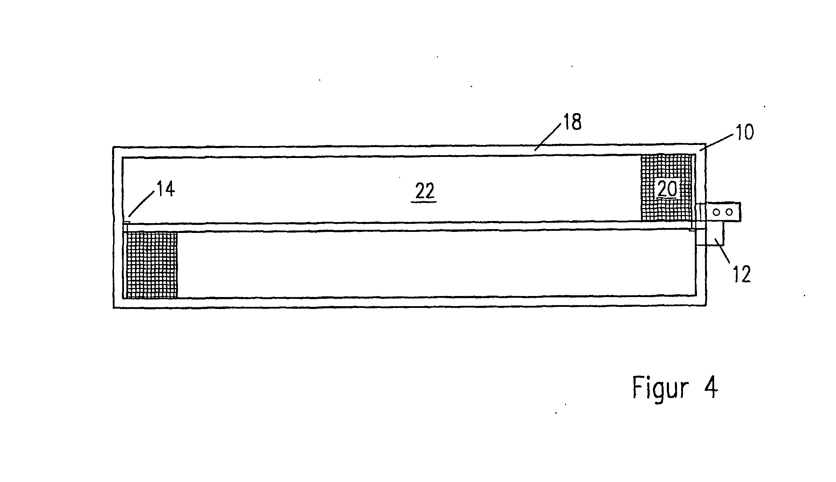

- Fig. 4: eine Fig. 1 entsprechende Draufsicht auf dieselbe, insofern abgewandelte Anlage, als beide Fischbecken mit je nur einem Modul zur mikrobiologischen Wasseraufbereitung bestückt sind;

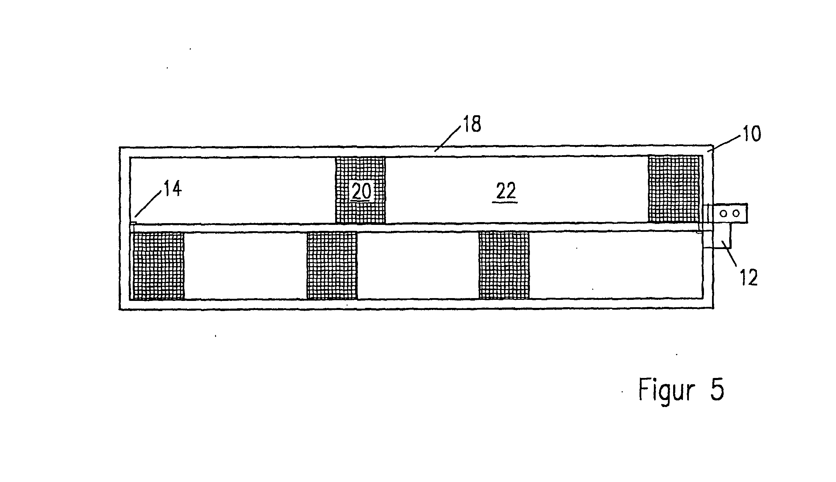

- Fig. 5: eine Fig. 1 und Fig. 4 entsprechende Draufsicht auf dieselbe, insofern abermals abgewandelte Anlage, als das eine Fischbekken mit zwei und das andere Fischbecken mit drei Modulen zur mikrobiologischen Wasseraufbereitung bestückt ist; und

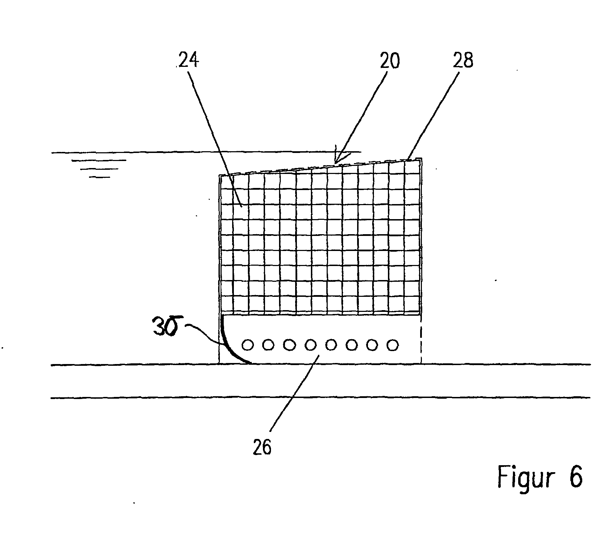

- Fig. 6: als vergrößerte Einzelheit die Seitenansicht eines Moduls.

Zu der Anlage gehören zwei gleich große, im Grundriß länglich-rechteckige Fischbecken 10, die parallel nebeneinander angeordnet sind. Das Wasser wird in einem gemeinsamen Kreislauf über beide Becken 10 zirkuliert. Die Strömungsverbindung zwischen den Becken 10 wird über einen Anbauschacht 12 und einen Einbauschacht 14 an den schmalen Stirnseiten der Becken 10 hergestellt. Aus dem Anbauschacht 12 wird mit einer Mammutpumpe Wasser durch ein fischbeckenexternes Filter gefördert. In dem Einbauschacht 14 befindet sich eine fischbeckeninterne UV-Bestrahlungsstation.

Die Fischbecken 10 haben einen durchgehend flachen, ebenen Boden 16. In die Seitenwände 18 der Fischbecken 10 sind einander gegenüberliegende Führungsschienen eingelassen, die es ermöglichen, ein jedes Fischbecken 10 mit bis zu sechs Modulen 20 für die mikrobiologische Wasseraufbereitung zu bestücken.

Durch die Module 20 werden Kompartimente 22 in den Fischbecken 10 abgeteilt, die gleich groß oder verschieden groß sein können. Die Module 20 sind von Fischbecken 10 zu Fischbecken 10 versetzt, um eine etwa gleichmäßige Verteilung auf dem Weg der Zirkulationsströmung zu erreichen.

Zu einem jeden Modul 20 gehört ein überfluteter Festbettreaktor 24 und ein darunter angeordnetes Begasungsteil 26, durch das sauerstoffhaltiges Gas zugeführt und das mit Sauerstoff angereicherte Wasser nach dem Mammut-Pumpeneffekt in aufsteigender Strömung durch den Festbettreaktor 24 gefördert wird. Der Festbettreaktor 24 nimmt die volle Breite der Fischbecken 10 ein. Seine Oberseite 28 ist abgeschrägt, so daß sie in Abströmrichtung abfällt. Abströmendig ist unter dem Festbettreaktor 24 eine konvex gekrümmte Strömungsleitblende 30 angeordnet, die bis unter das Begasungsteil 26 reicht.

Der Wassereintritt in das Modul 20 erfolgt auf Bodenhöhe des Fischbeckens 10 durch ein Gitter, das die Fische nicht passieren können. Die von den Modulen 20 abgeteilten Kompartimente 22 sind also dem Fischbesatz nach getrennt.

Das Gitter vor dem Wassereintritt in das Modul 20 läßt sich mit einem Dämmbalken absperren, um ein oder mehrere Kompartiment(e) 22 aus dem Wasserkreislauf herauszunehmen, den Wasserpegel darin zu senken und das/die Kompartiment(e) 22 abzufischen. Dazu muß die Absperrung mit dem Dämmbalken nicht hundertprozentig wasserdicht sein.

### Liste der Bezugszeichen

- 10: Fischbecken
- 12: Anbauschacht
- 14: Einbauschacht
- 16: Boden
- 18: Seitenwand
- 20: Modul
- 22: Kompartiment
- 24: Festbettreaktor
- 26: Begasungsteil
- 28: Oberseite
- 30: Strömungsleitblende

## Patentansprüche

1. Becken (10) zur Fischbrut, Fischaufzucht oder Intensivmast von Fischen, in dem sich wenigstens ein überfluteter Festbettreaktor (24) zur mikrobiologischen Wasseraufbereitung mit einem darunter angeordneten Begasungsteil (26) befindet, durch das sauerstoffhaltiges Gas zugeführt und das mit Sauerstoff angereicherte Wasser nach dem Mammut-Pumpeneffekt in aufsteigender Strömung durch den Festbettreaktor (24) gefördert wird, wobei der Boden (16) des Beckens (10) unter dem Festbettreaktor (24) und im Aufenthaltsbereich der Fische durchgehend flach ist, **dadurch gekennzeichnet, daß** der Festbettreaktor (24) mit dem Begasungsteil (26) als beckenextern vormontiertes, in das . Becken einsetzbares Modul (20) ausgebildet ist, und daß das Becken (10) darauf ausgelegt ist, mit einer variablen Anzahl von Modulen (20) bestückt zu werden.

2. Becken nach Anspruch 1, **dadurch gekennzeichnet, daß** mit dem darin eingesetzten Modul (20) dem Fischbesatz nach getrennte Kompartimente (22) in dem Becken (10) abgeteilt sind.

3. Becken nach Anspruch 2, **dadurch gekennzeichnet, daß** eine Zirkulationsströmung des Wassers durch die Kompartimente (22) eines oder mehrerer Becken (10) erfolgt.

4. Becken nach einem der Ansprüche 1 bis 3, **dadurch gekennzeichnet, daß** es mit seitlichen Führungsschienen für die Module (20) versehen ist.

5. Becken nach Anspruch 4, **dadurch gekennzeichnet, daß** die Führungsschienen in die Seitenwände (18) des Beckens (10) eingelassen sind, so daß sie über deren Oberfläche nicht vorstehen.

6. Becken nach einem der Ansprüche 1 bis 5, **dadurch gekennzeichnet, daß** die Oberseite (28) des Festbettreaktors (24) in Wasserabströmrichtung abfällt.

7. Becken nach Anspruch 6, **dadurch gekennzeichnet, daß** die Oberseite (28) des Festbettreaktors (24) eben und in Wasserabströmrichtung abfallend geneigt ist.

8. Becken nach einem der Ansprüche 1 bis 7, **dadurch gekennzeichnet, daß** abströmendig unter dem Festbettreaktor (24) eine Strömungsleitblende (30) angeordnet ist, die bis unter das Begasungsteil (26) reicht.

9. Becken nach Anspruch 8, **dadurch gekennzeichnet, daß** die Strömungsleitblende (30) konvex gekrümmt ist.

10. Modul (20) mit Festbettreaktor (24) und Begasungsteil (26) für ein Becken nach einem der Ansprüche 1 bis 9.

## Claims

1. A basin (10) for fish breeding, fish rearing or intensive fish fattening, in which there is located at least one flooded fixed bed reactor (24) for microbiological water treatment with an aeration element (26) arranged thereunder, through which element oxygen-containing gas is supplied and the oxygen-enriched water is conveyed in an upwards stream through the fixed bed reactor (24) in accordance with the air-lift pump effect, wherein the base (16) of the basin (10) is continuously flat beneath the fixed bed reactor (24) and in the fish residence zone, **characterised in that** the fixed bed reactor (24) with the aeration element (26) takes the form of a module (20) which is preassembled outside the basin and may be introduced into the basin, and **in that** the basin (10) is designed such that it may be equipped with a variable number of modules (20).

2. A basin according to claim 1, **characterised in that** introduction of the module (20) divides the basin (10) into separate compartments (22) depending on the fish stock.

3. A basin according to claim 2, **characterised in that** there is a circulatory flow of the water through the compartments of one or more basins (10).

4. A basin according to any one of claims 1 to 3, **characterised in that** it is provided with lateral guide rails for the modules (20).

5. A basin according to claim 4, **characterised in that** the guide rails are inset into the side walls (18) of the basin (10) such that they do not extend beyond the surface thereof,

6. A basin according to any one of claims 1 to 5, **characterised in that** the top (28) of the fixed bed reactor (24) slopes downwards in the water outflow direction.

7. A basin according to claim 6, **characterised in that** the top (28) of the fixed bed reactor (24) is flat and inclined downwards in the water outflow direction.

8. A basin according to any one of claims 1 to 7, **characterised in that** a flow baffle (30) is arranged under the fixed bed reactor (24) at the outflow end, said baffle extending beneath the aeration element (26) .

9. A basin according to claim 8, **characterised in that** the flow baffle (30) is convexly curved.

10. A module (20) with a fixed bed reactor (24) and aeration element (26) for a basin according to any one of claims 1 to 9.

## Revendications

1. Bassin (10) pour les alevins, la pisciculture ou l'engraissement intensif de poissons, dans lequel est prévu au moins un réactif à lit fixe (24) submergé destiné au traitement microbiologique de l'eau, avec un élément de gazéification (26) monté dessous, grâce auquel du gaz contenant de l'oxygène est introduit et l'eau enrichie en oxygène est transportée à travers le réacteur à lit fixe (24), suivant un courant ascendant, et suivant l'effet d'une pompe système mammouth, le fond (16) du bassin (10) situé sous le réacteur à lit fixe (24) et dans la zone où se tiennent les poissons étant plat de bout en bout, **caractérisé en ce que** le réacteur à lit fixe (24), avec l'élément de gazéification (26), est conformé en module (20) préassemblé à l'extérieur du bassin, intégrable dans le bassin, et **en ce que** le bassin (10) est conçu de façon à pouvoir être équipé d'un nombre variable de modules (20).

2. Bassin selon la revendication 1, **caractérisé en ce qu'**avec le module (20) qui y est intégré, des compartiments (22) divisent le bassin (10) en fonction de la population piscicole.

3. Bassin selon la revendication 2, **caractérisé en ce que** l'eau s'écoule par circulation à travers les compartiments (22) d'un ou de plusieurs bassins (10).

4. Bassin selon l'une des revendications 1 à 3, **caractérisé en ce qu'**il est pourvu de rails de guidage latéraux pour les modules (20).

5. Bassin selon la revendication 4, **caractérisé en ce que** les rails de guidage sont enchâssés dans les parois latérales (18) du bassin (10), de façon à ce qu'ils ne dépassent pas de leurs surfaces.

6. Bassin selon l'une des revendications 1 à 5, **caractérisé en ce que** la face supérieure (28) du réacteur à lit fixe (24) est inclinée dans la direction d'écoulement de l'eau.

7. Bassin selon la revendication 6, **caractérisé en ce que** la face supérieure (28) du réacteur à lit fixe (24) est plane et est inclinée dans la direction d'écoulement de l'eau.

8. Bassin selon l'une des revendications 1 à 7, **caractérisé en ce qu'**à l'extrémité d'écoulement, sous le réacteur à lit fixe (24) est monté un diaphragme (30) guidant l'écoulement, qui s'étend jusque sous l'élément de gazéification (26).

9. Bassin selon la revendication 8, **caractérisé en ce que** le diaphragme (30) guidant l'écoulement est incurvé de façon convexe.

10. Module (20) comportant un réacteur à lit fixe (24) et un élément de gazéification (26) destiné à un bassin selon l'une des revendications 1 à 9.
